Europäisches Patentamt

European Patent Office

Office européen des brevets

(11) Publication number: **0 408 123 A2**

# EUROPEAN PATENT APPLICATION

(21) Application number: **90201803.5**

(22) Date of filing: **05.07.90**

(51) Int. Cl.5: **H01J 47/08**

(30) Priority: **10.07.89 GB 8915788**
**05.03.90 GB 9004913**

(43) Date of publication of application:
**16.01.91 Bulletin 91/03**

(84) Designated Contracting States:
**DE FR GB IT**

(71) Applicant: **PHILIPS ELECTRONIC AND ASSOCIATED INDUSTRIES LIMITED**
**Philips House 188 Tottenham Court Road London W1P 9LE(GB)**
(84) **GB**

Applicant: **N.V. Philips' Gloeilampenfabrieken**
**Groenewoudseweg 1**
**NL-5621 BA Eindhoven(NL)**

(84) **DE**

(72) Inventor: **Gair, Salem Abraham, C/o Philips Components**
**New Road, Mitcham Junction**
**Mitcham, Surrey CR4 4XY(GB)**
Inventor: **Copleston, Ronald Edward, C/o Philips Components**
**New Road, Mitcham Junction**
**Mitcham, Surrey CR4 4XY(GB)**

(74) Representative: **Stevens, Brian Thomas et al**
**Philips Electronics Patents and Trade Marks Department Philips House 188 Tottenham Court Road**
**London W1P 9LE(GB)**

(54) **Geiger-Muller tubes their manufacture and systems comprising them.**

(57) A Geiger-Muller tube designed for use in an environment (for example, mounted on a rock drill) where subjected to mechanical shock and vibration has a tensioned anode wire (1) secured between first and second mounts (11,21) and (12,22) at opposite ends of the tube envelope. The wire tension is adjusted to a high value with a screwible-adjustment means (22,23,24) which is locked (*25) in the adjusted position, so that the natural frequency of vibration of the tensioned wire 1 does not resonate with (and may be much higher than) the frequencies to which the tube is subjected in use. The wire frequency is typically in excess of 400Hz and even 500Hz. The adjustment means (22,23,24) may be included in the mount (12,22) via which the envelope is evacuated and back-filled with the ionizible gas, and a gas-tight seal (30) can be provided around this part of the mount (12,22), for example by sealing off the gas pump tube. However the adjustment means may be designed into another part of the tube, for example using telescopic parts of the envelope whose sliding junction is made gas tight with a flexible seal.

Fig.1

# GEIGER-MULLER TUBES, THEIR MANUFACTURE AND SYSTEMS COMPRISING THEM.

This invention relates to Geiger-Muller tubes comprising an elongate envelope containing an ionizible gas around an anode wire, and further relates to methods of manufacturing such tubes and to systems comprising such tubes. Geiger-Muller tubes in accordance with the invention are designed for use in system environments where the tube is subject to vibration, particularly but not exclusively, at temperatures above room temperature. Thus, for example, the tube may be required to operate in detecting radio-activity when mounted on a drill shaft above a drill head drilling deeply into rock for oil or other mineral prospecting purposes.

United Kingdom patent specification GB-A-819 561 describes a special multi-cathode type of Geiger-Muller tube suitable for use in detecting low ionizing radiation at elevated temperatures, for example in bore-holes. The tube comprises an elongate envelope containing an ionizible gas around an anode wire, the wire being held taut along the length of the envelope between first and second mounts located towards respective first and second opposite ends of the envelope, and screwible-adjustment means for placing tension on the wire by an adjustment of the relative position of two relatively-movable parts of the tube in the direction of length of the envelope. In the particular known form of this type of tube as developed in the 1940s, the cathode comprises a series of apertured plates through which one or more anode wires extend. The ends of each wire are crimped in sleeves which secure the wire in the first and second mounts. GB-A-819 561 teaches placing some tension on the anode wire(s) by using a nut so as to pull outwardly slightly a cup in which the end of the wire is secured. The nut engages the mount. Although GB-A-819 561 discloses the use of a·welded stainless-steel construction for the detector housing in order to permit operation at elevated temperatures, the securement means for the ends of the wire are crimped tubes. The stainless-steel radiation detector type disclosed in GB-A-819 561 is suitable for measuring natural radioactivity in a well or bore-hole by being lowered and raised through the well/bore-hole by means of a cable, even to depths where the temperature may be several hundred degrees Fahrenheit (i.e. up to about 190 degrees Celsius).

It is an object of the present invention to provide a Geiger-Muller tube which is suitable for use in the severe mechanical shock and vibration environment of being mounted on a drill itself drilling into the rock.

According to one aspect of the present invention there is provided a Geiger-Muller tube comprising an elongate envelope containing an ionizible gas around an anode wire, the wire being held taut along the length of the envelope between first and second mounts located towards respective first and second opposite ends of the envelope, and screwible-adjustment means for placing tension on the wire by an adjustment of the relative position of two relatively-movable parts of the tube in the direction of length of the envelope, characterised by the tube being designed for use in a vibrating environment subject to vibration at particular frequencies, in that the wire is welded to first and second securement members which respectively form part of the first and second mounts, and in that the screwible-adjustment means is locked in such a position of the two relatively-movable parts as produces so high a tension in the wire as to tune the fundamental frequency of vibration of the wire to a high value (particularly, but not exclusively, in excess of 400Hz) which differs from the particular frequencies in the vibrating environment.

In experiments leading to the present invention, the applicants have found that customary constructions of Geiger-Muller tubes for operation in environments with elevated temperature and mechanical shock and vibration can lead to operational, ageing and lifetime problems. If a vibration of the tube (for example, mounted on the shaft of a rock drill) corresponds with a resonant frequency of the taut wire, severe vibration of the anode wire can occur which may weaken the wire and/or its securement at the ends and/or may even cause the anode wire to touch and hence to short-circuit with the cathode. Fracturing of the wire may occur as a result of this vibration or a severe mechanical shock after it is weakened. If the tensioned wire is secured in its mounts solely by crimping in a tube, slippage of the wire in the crimped tube can occur due to vibration and temperature cycling leading to a significant reduction in the tension. The crimping can also locally weaken the wire reducing its tensile strength which can provide reliability problems. Furthermore, in welding experiments leading to the present invention, the applicants have found that it is not easy to maintain a high tension on a pulled wire which is subsequently welded, because local heating of the wire in the welding operation reduces the tension in the wire, for example a reduction in frequency from above 500Hz to below 100Hz or even 50Hz. If a tubular member crimped onto the tensioned wire is welded, pockets of residual gas can be trapped in the welded crimp and this residual gas may leak into the gas space during the operational lifetime of the Geiger-Muller tube and degrade the performance of the tube (especially as such leakage may be enhanced by the elevated temperature and/or vibration). Furthermore, the applicants have found that, in some situations with the wire mounted in ceramic insulators, severe vibration of the wire touching the insulators can cause chipping of the insulator resulting in loose particles in the gas space which may cause further damage to the wire.

The present invention is based on a recognition that, for a Geiger-Muller tube designed for use on the shaft of a working rock-drill or in another vibrating environment subject to vibration at particular frequencies, it is advantageous to fine tune the tension of the wire so as to avoid resonant frequencies and that a suitably high tension can be precisely set and maintained by screw adjustment of a welded-wire. Thus, in a tube construction in accordance with the invention, the fundamental frequency of vibration of the wire can be set to a value which is above the frequency of intense vibration and which differs from each of the particular frequencies in the vibrating environment. This high tension (and precise frequency value) can be reliably held due to the welding of the wire to the first and second securement means, and this welding can be carried out before making the adjustment so that the tension is not changed. By using screwible-adjustment of the relative longitudinal position of the two parts mechanically coupled to the welded wire, a fine adjustment of the tension in the welded wire can be achieved during manufacture. In this way the wire tension can be tuned so that the natural frequency of vibration of the tensioned wire does not correspond to any frequency to which the tube is subjected in use. A high tension can be applied to the welded wire in this manner by simply a few turns of the screwible-adjustment means, so that the natural frequency of vibration of the tensioned wire can be tuned to be above any frequency normally occuring in the environment in which the tube is used. For this purpose, it is desirable to tune the frequency of the wire to, for example, above 400Hz for use on a rock drill.

By simply locking the screwible-adjustment means in the adjusted position the set tension of the welded wire can be maintained in the tube. This can be achieved in a variety of ways without locally heating the wire. Thus, for example, when the screwible-adjustment means comprises a nut (i.e. an internally-threaded member of any shape and form) rotating on an externally-threaded member, the locking may be achieved by mechanically deforming the screw-thread to prevent further rotation of the nut from its adjusted position, or by a spot-weld on the screw-thread, or by spot-welding an edge of the nut to another part of the tube, or by a suitable adhesive between parts of the tube,or by tightening a locking nut beside the adjusted nut, or even by relying on the angle and pitch of the screw-thread and a high tension in the wire to lock the nut in its adjusted position for tubes where the tube environment does not invclve such severe vibration and shocks as could move the nut in this high-tensioned state.

According to another aspect of the invention, there is provided a system (for example a radiation measuring system on a rock drill) comprising a Geiger-Muller tube in accordance with the invention, characterised by the tube being mounted in a vibrating environment subject to vibration at particular frequencies, and by its screwible-adjustment means being locked in such a position of the two relatively-movable parts as produces so a high tension in the wire as to tune the fundamental frequency of vibration of the wire to a high value (particularly, but not exclusively, in excess of 400Hz) which differs from the particular frequencies in the vibrating environment.

In one form of tube in accordance with the invention, the envelope has relatively-movable telescopic parts to permit adjustment of the length of the envelope, and the screwible-adjustment means adjusts the relative position of these telescopic parts. This permits an external adjustment of the tension of the wire, after welding (or otherwise securing) the wire in the mounts. The arrangement can be constructed in such a manner that the wire may be given its desired tension after filling the envelope with the ionizible gas. A re-usable form of locking of the telescopic parts and screwible-adjustment means may be adopted so that, for example, even the customer may be able to adjust or to restore the wire tension to a desired value during the operational lifetime of the tube.

In this or another form of tube in accordance with the invention, the screwible-adjustment means may be included in one (or both) of the mounts of the wire. Thus, the two relatively-movable parts may be included in the second mount in the form of a screw-threaded member carrying a nut (i.e. an internally-threaded member of any shape and form) whose position along the screw-thread provides for adjustment in the longitudinal position of the wire in the second mount, which nut is locked in such a position along the screw-thread as produces a desired tension in the wire.

Where the anode wire enters the first and second mounts from the gas space of the envelope, a recess may be present in both the first and second mounts to permit vibrational movement of the wire without touching the recessed part of the mount. The recessed parts may be, for example, ceramic insulators which are protected in this manner against chipping by the vibrating wire. Furthermore, in order to permit fast but efficient evacuating and back-filling of the gas space around the wire, the second mount preferably comprises at least one gas conduit which is additional to a passage accommodating the wire in the second mount, and this additional gas conduit may extend from the recess in the second mount.

It should be noted that in a construction in accordance with the invention, any welding of the wire can be done before the wire is tensioned. If a sealed end-cap, for example, is used, it is not necessary to form a gas-tight seal of the wire in the second mount or between the parts of the tube including the screw-adjustable parts and their manner of locking.

According to a further aspect of the present invention there is provided a method of manufacturing a Geiger-Muller tube in accordance with the invention, and including the steps of (a) welding the wire to the first and second securement members, (b) screwing the screwible adjustment means to pull the welded wire until a desired high tension of the wire is obtained, (c) subjecting the tensioned wire in the tube to a vibration and temperature test-programme, (d) thereafter re-adjusting the screwible-adjustment means as necessary to re-adjust the tension of the wire until the desired high fundamental frequency of vibration is obtained, and (e) locking the screwible-adjustment means when the tension of the wire corresponds to said desired high fundamental frequency.

These and other features in accordance with the invention are illustrated, by way of example, in specific embodiments of the invention now to be described with reference to the accompanying diagrammatic drawings. In these drawings:

Figure 1 is a cross-sectional view of one embodiment of a Geiger-Muller tube in accordance with the invention;

Figure 2 is a perspective view of part of the second mount in the tube of Figure 1;

Figure 3 is a schematic representation of the tensioning of the anode wire at a stage in the manufacture of the tube of Figure 1;

Figure 4 is a cross-sectional view of the second mount end of the tube envelope of Figure 1 at a later stage in its manufacture;

Figure 5 is a cross-sectional view of the second end of another embodiment of a Geiger-Muller tube in accordance with the invention at a stage in its manufacture;

Figures 6 and 7 are cross-sectional views of further embodiments of a Geiger-Muller tube in accordance with the invention;

Figure 8 is a cross-sectional view of the anode end of yet another embodiment of a Geiger-Muller tube in accordance with the invention.

It should be noted that the Figures are diagrammatic and not drawn to scale. The relative dimensions and proportions of some parts of these drawings have been shown exaggerated or reduced in size for the sake of clarity and convenience in the drawings. The same reference signs as used in one embodiment are generally used when referring to corresponding or similar parts in other embodiments.

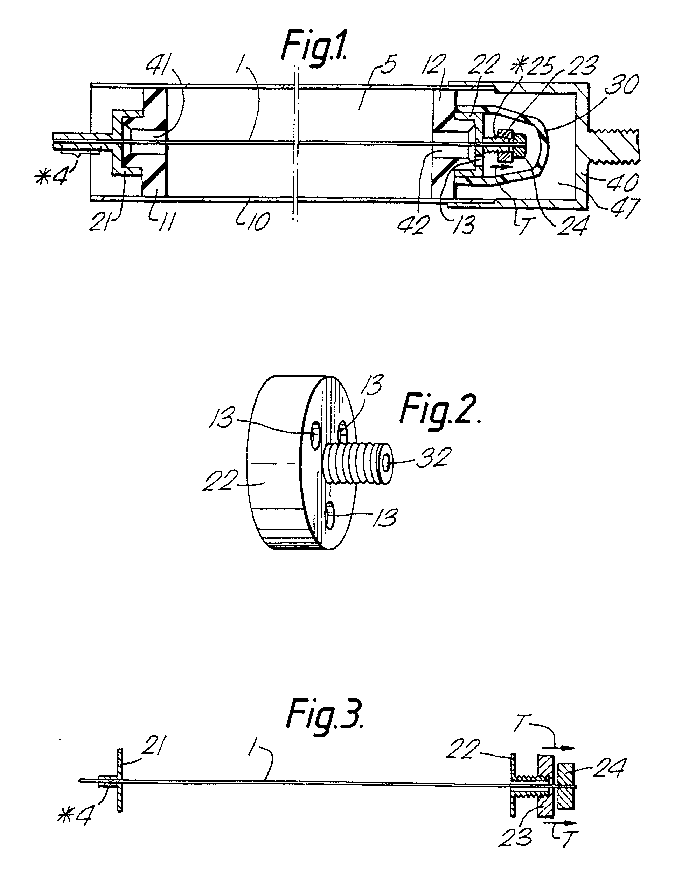

The Geiger-Muller tube of Figure 1 comprises an elongate envelope comprising a metal tube 10 forming the cathode of the device. An anode wire 1 is held taut along the length of the envelope between first and second mounts (11,21) and (12,22,23,24) respectively, located adjacent to respective first and second opposite ends of the envelope. The envelope contains an ionizible gas in the space 5 around the anode wire. The second mount (12,22,23,24) has a gas conduit 13 extending therethrough into the gas space 5. A sealed end-cap 30 is present at the second end of the envelope to provide a gas-tight seal around the gas conduit 13 and the wire 1 in the second mount (12,22,23,24).

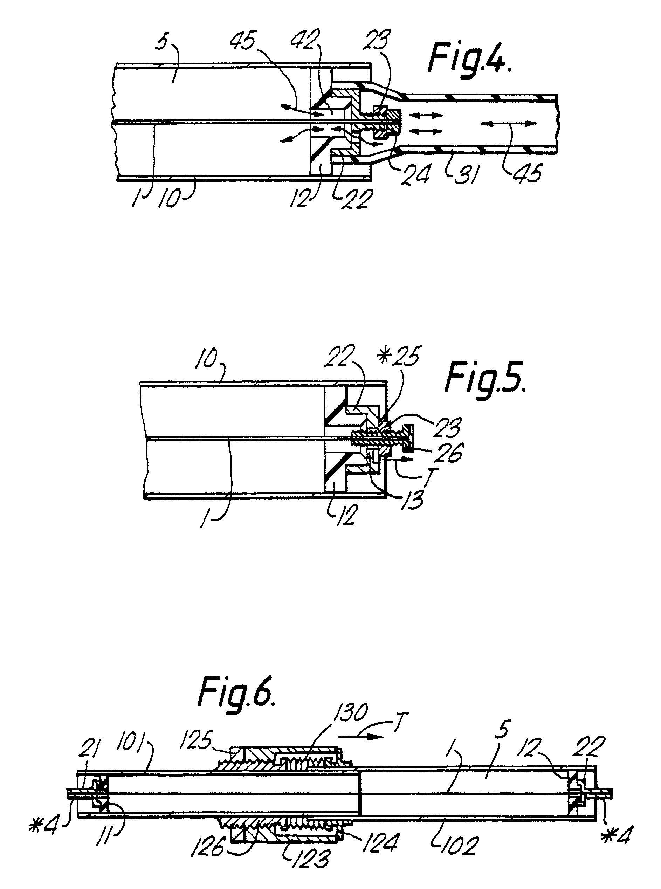

The second mount (12,22,23,24) has a construction which provides for adjustment in the longitudinal position of the wire 1 in the second mount (12,22,23,24) and thereby of the tension of the wire 1, and which permits locking of the wire 1 in the adjusted longitudinal position. In this specific embodiment (and that of Figure 5), the second mount includes a screw-threaded member carrying a nut 23 whose position along the screw-thread provides for the adjustment, and the nut is locked (for example, by a spot-weld *25) in such a position along the screw-thread as produces a desired tension in the wire 1.

In the case of Figure 1, the wire 1 passes through a screw-threaded member formed by an externally-threaded pin of a metal end cap 22, see Figure 2. The wire 1 fits loosely in an aperture 32 through the end cap 22. The wire 1 carries an abutment 24 against which the nut 23 bears to adjust the tension in the wire. The abutment 24 is directly welded to the end of the wire 1, the weld being made before the wire is tensioned. The opposite end of the wire 1 is secured with a gas-tight seal to the first mount (11,21) by being welded in the tubular anode pin of the metal end cap 21, the weld *4 being made before the wire 1 is tensioned and without crimping. Welding the parts directly produces a particularly strong and reliable seal in a gas-tight manner. However, instead of direct welding, an intermediate material may be used in a gas-tight weld between the untensioned wire 1 and the members 21 and 24, for example as in brazing.

The tube of Figure 1 is designed for use in a vibrating environment subject to vibration at particular frequencies. It may be designed for mounting on a rock drill where it experiences its most intense vibrations at frequencies below 400Hz. The screwible-adjustment means 22 to 24 is adjusted and locked in such a position of the two relatively-movable parts 22 and 24 as produces so high a tension in the wire as to tune the fundamental frequency of vibration of the wire to a value which is in excess of 400Hz and which differs from each of the particular frequencies in the vibrating environment, for example the main harmonics of the most intense vibrations.

Figure 3 illustrates how the wire 1 is tensioned in the Figure 1 embodiment. After welding the wire 1 to the first mount (11,21), the wire 1 is pulled (as indicated by arrow T) by rotating (on the screw-thread of the end cap 22) the nut 23 which bears against the wire abutment 24. With a few turns of the nut 23 a high tension can be obtained, because the parts 22 to 24 act as a screw-jack. The natural frequency of vibration of the tens ioned wire 1 increases with increased tension (i.e. with increased rotation of be monitored during the adjustment of the nut 23 so that it is adjusted to a value higher than any frequency normally occurring in the environment in which the tube is used, or at least to a value not normally occurring in that environment.

By controllably pulling the welded wire in this manner, the desired high tension of the wire 1 is obtained. Thereafter the tensioned wire 1 may be subjected in the tube to a vibration and temperature test-programme, after which the screwible-adjustment means 22 to 24 may be re-adjusted to re-adjust (as may be necessary) the tension of the wire 1 until the desired high of the wire corresponds to said desired high fundamental frequency, for example a frequency of 500Hz or more. The tensioned wire 1 may be locked in the second mount (12,22,23,24) in its adjusted position by, for example, a spot weld *25 between the nut 23 and the screw-thread of the cap 22, or by mechanically deforming the screw-thread at *25, or possibly by tightening a locking nut (not shown) against the nut 23 at *25.

A pump tube 31 (see Figure 4) is sealed to the second mount (12,22,23,24). This tube 31 may be of glass and may be secured by a glass-to-metal seal of the metal end-cap 22 as illustrated by way of example in Figure 4. The tube 31 communicates with at least one gas conduit 13 in the second mount (12,22,23,24). By way of example, Figure 2 illustrates, in the metal end cap 22, three gas conduits 13 which are additional to and separate from the passage 32 accommodating the wire 1. In addition to the metal end cap 22, the second mount also includes an insulator 12 (for example, of ceramic) having a recess 42 which extends therethrough and via which the gas conduits 13 communicate with the gas space 5 around the anode wire 1. The first mount (11,21) also comprises a similar insulator 11 (for example of ceramic) with a recess 41. The recesses 41 and 42 permit vibrational movement of the tensioned wire 1 (during use of the tube) without the wire 1 touching the recessed part 11 and 12 respectively of the mount.

The pump tube 31 may be secured to the assembly after the vibration and temperature tests and after the readjustment of the wire tension. However, this test programme and the readjustment of the wire tension may be carried out after attaching the pump tube 31.

As illustrated by the double-ended arrows 45 in Figure 4, the space 5 is first evacuated via the tube 31 and is then back-filled with the desired ionizing gas composition. Known gas compositions may be used, for example, a mixture of one or more noble gases and a quenching agent. The quenching agent serves to terminate in known manner (in circuit cooperation with an anode resistor) the ionization current pulse which the Geiger-Muller tube generates by impact ionization in response to an individual ionizing-radiation event. After filling the space 5 with the ionizing gas, the pump sealed end-cap 30.

A cathode connector 40 may then be directly welded or brazed to the cathode tube 10 around the sealed second mount (12,22,23,24), and this connector 40 also provides mechanical protection around the sealed end-cap 30. The space 47 between the connector 40 and the end-cap 30 may be filled with a flexible insulating material, for example a silicone rubber. The cathode connector 40 may have, for example, an externally-threaded cathode pin. At the opposite end of the tube 10, an insulating end cap may be provided carrying an anode terminal connected via an anode resistor to the pin 21. This anode resistor can be accommodated within the insulating end cap and protected in this manner from the environment in which the Geiger-Muller tube is used.

The tube of Figure 1 may be constructed with materials such as are customary in Geiger-Muller tubes. Thus, for example, the insulators 11 and 12 may be of a ceramic which is compatible with the thermal expansion coefficient of the metal tube 10 and which can be sealed in known manner to the metal tube 10. The pump tube 31 (and end cap 30) may be of glass. The metal end caps 21 and 22, the nut 23 and abutment 24, and the cathode tube 10 and connector 40 may be of stainless steel. The wire 1 may also be of a stainless steel. The surfaces of these components may be treated in known manner to protect them against the gas mixture in space 5 and the environment in which they are to be used. In a specific example by way of illustration, the cathode tube 10 may be about 245mm in length with a diameter of about 16mm, and the wire 1 may have a diameter of about 0.6mm and a free length of about 235mm between the first and second mounts (11,21) and (12,22,23,24). A tension corresponding to a weight of about 20kg or more on this wire 1 may be produced, depending on the desired frequency of vibration for example a frequency of 500Hz or more.

Figure 5 illustrates a modified form of a screw-threaded tension-adjustment mechanism in a similar Geiger-Muller tube in accordance with the invention. In this case, the wire 1 carries a screw-threaded member (shown as a bolt 26 in this example) which is located in an aperture in the part 22 of the second mount (12,22,23,26) against which the nut 23 bears to adjust the tension in the wire 1. The bolt 26 is a loose fit in the aperture in the end cap 22. The wire 1 is welded to the bolt 26, and the head of the bolt 26 may be slotted to take a tool such as a screw-driver which is used to prevent rotation of the bolt 26 (and hence to prevent torsion of the wire 1) when the nut 23 is rotated on the bolt 26. In this end cap 22, the additional gas conduits 13 may have enlarged openings at the side where the nut 23 bears, and these conduits 13 may be lateral lobe extensions of the aperture in which the bolt 26 is located. The nut 23 may be spot welded to the end cap 22 at *25 in order to lock the wire 1 in its tensioned state. Thereafter further manufacturing steps as described with respect to Figures 1 and 4 may be performed to form the sealed end cap 30 and to provide cathode connector 40 and an anode end cap.

It will be evident that other designs of screw-threaded members may be used to adjust the tension. For example, the wire 1 may be secured to a dome-shaped nut (or internally threaded member of another shape and form) carried on a bolt which is rotated to move the nut along the bolt. Preferably an arrangement is adopted in which the abutment or screwible member secured to the wire 1 is not rotated. In the embodiments of Figures 2 to 6 the relatively movable parts 22,23,24 and 26 of the screwible adjustment means are mechanically coupled to the wire 1 by being included in the second mount (12,22,23,24,26) of the wire 1. An arrangement is also possible in which the screwible adjustment means does not form part of the first or second mount (11,21) or (12,22) but comprises two other relatively-movable parts which are mechanically coupled to the first and second mounts (11,21) and (12,22). Figure 6 illustrates one such embodiment.

The Geiger-Muller tube of Figure 6 is a modification of that of Figures 1 to 5, in which the cathode envelope comprises relatively-movable telescopic parts 101 and 102 to permit adjustment of the length of the envelope. The screwible-adjustment means (123,124,126) adjusts the relative position of these telescopic parts 101 and 102. In this embodiment, the first and second mounts (11,21) and (12,22) may be of the same form as each other, except for the presence of at least one gas conduit (13, not shown) in the metal end cap 22. The anode wire 1 can be welded at each end in the metal end caps 21 and 22, in the same manner as for the end cap 21 in Figures 1 to 5.

A flexible gas-tight seal 130 is present around the junction between the telescopic parts 101 and 102 so that the envelope can be filled with the ionizing gas before adjusting the telescopic parts 101 and 102 to produce the desired tension in the wire 1. The evacuation and gas filling is carried out in the same manner as described with reference to Figure 4 using the conduits 13 and a pump tube 31 which is subsequently sealed off to form a gas-tight seal 30 similar to that of Figure 1. This seal 30 at the second mount (12,22) is not shown in Figure 6 for clarity in the drawing. In the form illustrated by way of example in Figure 6, the envelope part 101 slides in a snug fit within the envelope part 102, and the flexible gas-tight seal 130 is formed by a bellows sealed at one end to an anchor 126 on the part 101 and at the opposite end to an anchor 124 on the part 102. In this specific example these anchors form parts of an externally-threaded annular member 126 and an abutment 124 of the screwible-adjustment means (123,124,126). The parts 126 and 124 may be of stainless steel and may be brazed to their respective envelope parts 101 and 102.

The screw-adjustment of the tension in the wire 1 may be carried out as a final step in the manufacture of the Geiger-Muller tube of Figure 6. A nut 123 is rotated on the screw-thread of the member 126 to bear against the abutment 124 and thereby to apply the tensioning pull T to the wire 1 via the mechanical coupling of nut 123 to the first mount (11,21) and the mechanical coupling of the abutment 124 to the second mount (12,22). In the form illustrated in Figure 6, the nut 123 is so shaped as to form a protective shield around the bellows 130. The nut 123 is locked along the screw-thread in the position which produces the desired tension in the wire 1. This locking may be effected in any of the ways described hereinbefore, for example using spot-welding on the screw-thread or between the parts 123 and 124. However, Figure 6 illustrates locking using a lock-nut 125 tightened against the nut 123 on the same threaded member 126. An advantage of this arrangement is that even the customer can adjust or restore the wire tension during the operational lifetime of the tube. The tube manufacturer or even the customer may carry out his own vibration and temperature test-programme on the complete tube, before re-adjusting the adjustment means 123 to 126 as may be necessary to re-adjust the tension of the wire 1 until a desired high fundamental frequency of vibration is obtained.

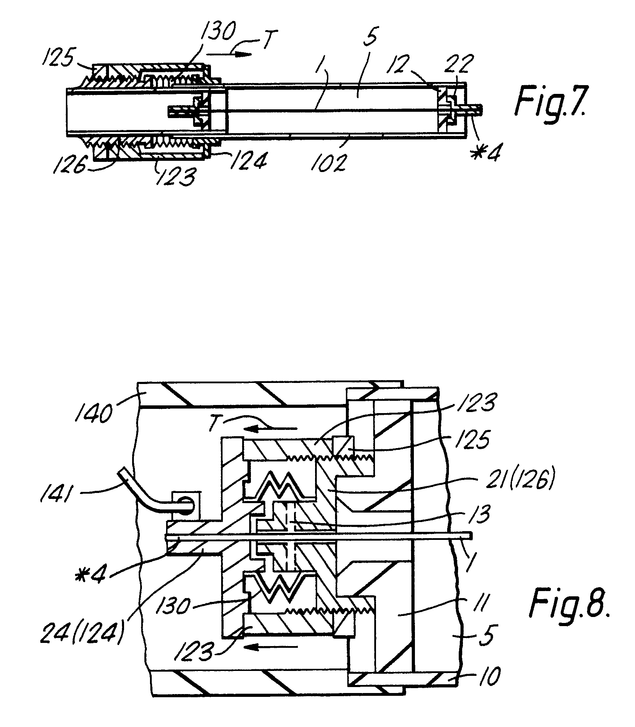

In the embodiment of Figure 6, the overlap of the telescopic parts 101 and 102 and the adjustment and locking means 123 to 126 are present near the middle of the tube length, which is a sensitive area of the Geiger-Muller tube requiring to be penetrated by the radiation to be detected. Figure 7 illustrates a variant which has the advantage that the overlapping telescopic parts 101 and 102 and screwible-adjustment and locking means 123 to 126 are located at an end of the tube and do not overlap to any significant extent the sensitive gas-filled space 5 of the tube.

The relatively-movable parts 123 to 126 in the embodiments of Figures 6 and 7, are mounted on the outside of the Geiger-Muller tube. Figure 8 illustrates an embodiment in which the relatively movable parts 123 to 126 are mounted inside the end cap at the anode terminal end of the tube. In this case, the wire mount (12,22) at the cathode end of the tube may be of the same simple welded form as illustrated in Figures 6 and 7. At the anode end, the wire 1 is a loose-fit in the end-cap 21, which includes conduits 13. The outside surface of the end-cap 21 is screw-threaded so as to be equivalent to member 126 (of Figures 6 and 7) on which the elongate nut 123 is mounted. Welded to the end of the wire 1 is the abutment member 24 (equivalent to 124) against which the elongate nut 123 bears. The anode resistor lead 141 is mounted on a connector flange on the abutment member 24.

A bellows or other form of gas-tight sealing means 130 is sealed between the members 21-(126) and 24(124), inside the cavity of the nut 123. As illustrated in Figure 8, the engaging parts of the adjustable members 21,24,123 etc. may be shaped to form guides for retaining the alignment of the members in the longitudinal direction of the tube as the nut 123 is rotated to move the abutment 24 relative to the end-cap 21 so as to obtain the desired frequency of vibration of the wire 1. The nut 23 may be locked in its adjusted position in any of the ways described hereinbefore, for example with a lock nut 125. Reference 140 illustrates part of the insulating end cap at the anode end of the tube. By removing this end cap the customer can adjust or restore the wire tension during the operational lifetime of the tube, in a similar manner to that of embodiments 6 and 7.

The use of at least one screw-threaded member with a fine-pitch thread is advantageous in permitting fine tuning of the tension in the wire 1. The other member which is relatively rotatible with respect to this screw-thread need not be threaded but may have protrusions which engage with the screw-thread. However, screwible adjustment can also be obtained without a screw-thread on any of the members. Thus, for example, the adjustable members may have cam surfaces (instead of a screw-thread), although in this case it is not so easy to obtain a fine adjustment of a high tension in the wire 1.

From reading the present disclosure, other variations will be apparent to persons skilled in the art. Such variations may involve other features which are already known in the design, manufacture and use of Geiger-Muller tubes and wire tensioning and locking mechanisms and component parts thereof, and which may be used instead of or in addition to features already described herein. Although claims have been formulated in this application to particular combinations of features, it should be understood that the scope of the disclosure of the present application also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention. The applicants hereby give notice that new claims may be formulated to such features and/or combinations of such features during the prosecution of the present application or of any further application derived therefrom.

**Claims**

1. A Geiger-Muller tube comprising an elongate envelope containing an ionizible gas around an anode wire, the wire being held taut along the length of the envelope between first and second mounts located towards respective first and second opposite ends of the envelope, and screwible-adjustment means for placing tension on the wire by an adjustment of the relative position of two relatively-movable parts of the tube in the direction of length of the envelope, characterised by the tube being designed for use in a vibrating environment subject to vibration at particular frequencies, in that the wire is welded to first and second securement members which respectively form part of the first and second mounts, and in that the screwible-adjustment means is locked in such a position of the two relatively-movable parts as produces so high a tension in the wire as to tune the fundamental frequency of vibration of the wire to a high value (particularly, but not exclusively, in excess of 400Hz) which differs from the particular frequencies in the vibrating environment.

2. A Geiger-Muller tube as claimed in claim 1, further characterised in that the envelope comprises a metal tube forming a cathode, and each of the first and second mounts comprises an electrical insulator between the cathode and the securement members of the anode wire.

3. A Geiger-Muller tube as claimed in claim 1 or claim 2, further characterised in that the two relatively-movable parts are included in the second mount in the form of at least two screw-cooperating portions whose relative screw-adjusted position provides for the adjustment in the longitudinal position of the wire and in that these portions are locked together in such a relative screw-adjusted position as produces the desired tension in the wire.

4. A Geiger-Muller tube as claimed in claim 3, further characterised in that the second mount has a gas conduit extending therethrough into the gas space around the anode wire, and a sealed end-cap is present at the second end of the envelope to provide a gas-tight seal around the gas conduit and wire in the second mount.

5. A Geiger-Muller tube as claimed in any one of the preceding claims, further characterised in that, where the anode wire enters the first and second mounts from the gas space of the envelope, a recess is present in both the first and second mounts to permit vibrational movement of the wire without touching the recessed part of the mount.

6. A Geiger-Muller tube as claimed in claim 5, further characterised in that the second mount comprises at least one gas conduit which is additional to a passage accommodating the wire in the second mount and which extends from the recess in the second mount.

7. A Geiger-Muller tube as claimed in any one of the preceding claims, characterised in that the envelope has relatively movable telescopic parts to permit adjustment of the length of the envelope to produce the desired high tension in the wire, in that the relative position of the telescopic parts is adjusted by the screwible-adjustment means, and in that a flexible gas-tight seal is present around the junction between the telescopic parts of the

8. A Geiger-Muller tube as claimed in both claims 2 and 7, further characterised in that the relatively movable telescopic parts are parts of the metal tube forming the cathode.

9. A Geiger-Muller tube as claimed in both claims 3 and 7, further characterised in that the telescopic parts are parts of the second mount.

10. A system comprising a Geiger-Muller tube as claimed in any one of the preceding claims, characterised by the tube being mounted in a vibrating environment subject to vibration at particular frequencies, and by its screwible-adjustment means being locked in such a position of the two relatively-movable parts as produces so a high tension in the wire as to tune the fundamental frequency of vibration of the wire to a high value (particularly, but not exclusively, in excess of 400Hz) which differs from the particular frequencies in the vibrating environment.

11. A system as claimed in Claim 10, characterised by the Geiger-Muller tube being mounted on a rock drill.

12. A method of manufacturing a Geiger-Muller tube as claimed in any one of the preceding claims, including the steps of (a) welding the wire to the first and second securement members, (b) screwing the screwible adjustment means to pull the welded wire until a desired high tension of the wire is obtained, (c) subjecting the tensioned wire in the tube to a vibration and temperature test-programme, (d) thereafter re-adjusting the screwible-adjustment means as necessary to re-adjust the tension of the wire until the desired high fundamental frequency of vibration is obtained, and (e) locking the screwible-adjustment means when the tension of the wire corresponds to said desired high fundamental frequency.

13. A method as claimed in claim 12, further characterised in that before the tensioning step (b) the wire is secured with a gas-tight weld to the first mount.

14. A method of manufacturing a Geiger-Muller tube as claimed in claim 7, further characterised in that the envelope is filled with the ionizing gas before adjusting the telescopic parts to produce the desired tension.

# Fig.1.

# Fig.2.

# Fig.3.

Fig.4.

Fig.5.

Fig.6.

Fig.7.

Fig.8.